# EUROPEAN PATENT SPECIFICATION

(11) **EP 0 515 334 B1**
(45) Date of publication and mention of the grant of the patent: **20.12.1995**
(21) Application number: 92850107.1
(22) Date of filing: 12.05.1992
(51) Int. Cl.: G02B 23/14, G02B 23/12, G02B 23/08, F41G 1/00, F41G 3/06

(54) **Sight**
Sichtgerät
Viseur optique

(30) Priority: 13.05.1991 SE 9101445
(43) Date of publication of application: 25.11.1992
(73) Proprietor: CelsiusTech Electronics AB, 175 88 Järfälla (SE)
(72) Inventor: Alexandersson, Per, S-181 57 Lidingö (SE); Möller, Bo, W-7082 Oberkochen (DE); Westberg, Rolf, S 190 30 Kungsängen (SE)
(74) Representative: Falk, Bengt

(56) References cited:
- EP-A- 0 201 003
- EP-A- 0 345 408
- DE-A- 3 931 883
- GB-A- 2 149 141

## Description

The present invention relates to a fire control sight for combat vehicles or anti-aircraft defence according to the preamble of claim 1.

A sight of the above kind is previously known from EP-A-201,003. In this case the radiation for the laser range finding is separated at an early stage in a first beam divider close to the input window. This results in that two different radiation paths with separate optical elements in the two paths are required.

According to DE-C-39 31 883 an optical sensor device is known in which the infrared radiation is first separated from the radiation incident on the input window. In this case, however, the laser range finding is allotted a separate radiation path in which the backside of a mirror coated with reflective material on both sides is used, the front side being included in the radiation path of the infrared separation. The sensor device construction requires a wide input window for the two radiation paths to pass it.

In fire control systems for combat vehicles or anti-aircraft defence, a plurality of optical channels is required. Examples of such optical channels are firstly a sight channel for visible light, a sight channel for infrared radiation and a transmitter and receiver channel for laser range finding. These three types of channels are normally designed according to the state of the art with three separate optical apertures. Such an arrangement obviously requires a fairly large space in the enclosure of the combat vehicle or in connection with the air defence system. It would thus be a great advantage to be able to combine one or more of these apertures. With such a combination, the space and the exposed surface would become considerably less. Another advantage of such a combination is that the optical input stage, here called top mirror, can have a significantly reduced surface and thus a cost-saving design. The designation "coaxial" is here introduced for a design which exhibits the said combination of several apertures.

The said fire control system normally contains a plurality of optical subfunctions. According to the prior art, these subfunctions are normally assembled in a specially constructed sight housing. Since the requirements of the users are different, a sight housing must therefore be specially constructed for the special requirements of each user. It would therefore be a production-related economical advantage if the different optical subfunctions could be standardised with respect to their optical and mechanical boundary surfaces so that a modular type of construction would be the consequence. Another advantage of the modular type of construction is that a system delivered earlier can be upgraded by exchanging individual modules. The term "common modules" is known in the technology for sights which use infrared radiation. This term implies a modular type of construction of the system, the parts of which, besides optical system parts, also comprise opto-mechanical system parts, detector system parts and purely electronic system parts. "Common modules" permit a large cost-saving in the construction of the particularly costly infrared sights. A corresponding economic problem also exists for sights which use visible light, but there has hitherto been no modular construction of these sights.

It is therefore the aim of this invention to produce a fire control sight in which several optical apertures have been combined so that the sight requires a comparatively small space. According to the invention, the optical input aperture of the sight is therefore common to the optical channels, and their beam paths are superimposed on one another. The sight thus has a coaxial configuration with a single common optical input aperture.

It is another aim of the invention to produce a fire control sight which has a modular construction, that is to say a sight divided into a number of optical or electro-optical modules.

The aims are obtained by a fire control sight as claimed in the characterising part of claim 1.

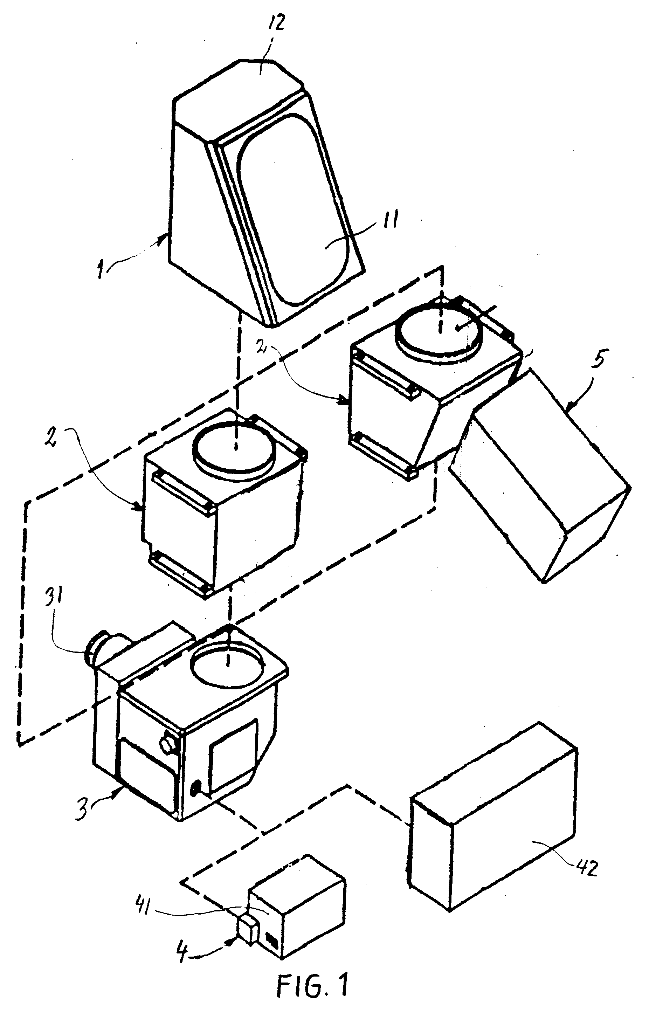

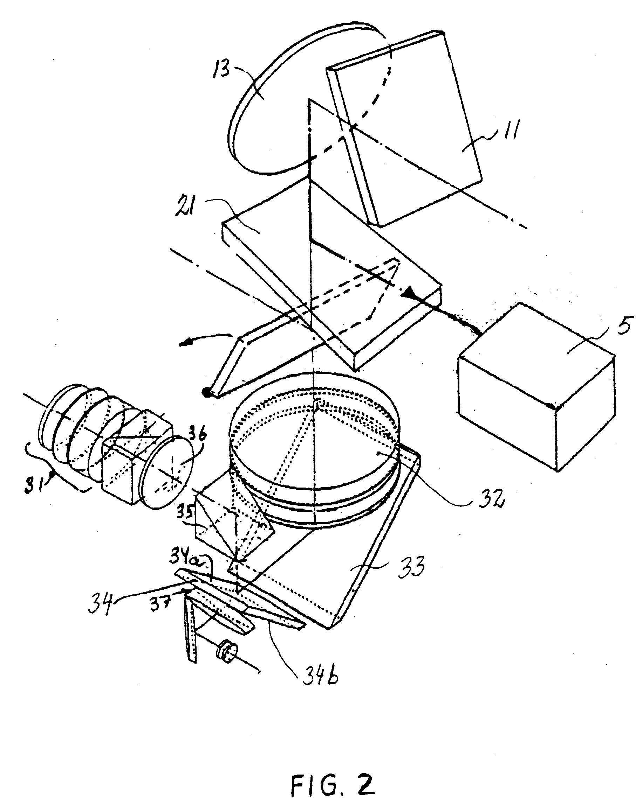

In the text which follows, the invention will be described in greater detail in connection with the attached drawings, in which Figure 1 shows an example of a modular construction of the sight, and Figure 2 shows, among other things, the optical module in greater detail.

Figure 1 shows a sight system which is made up of a top module 1, an intermediate module 2, an optical module 3, a laser range finder module 4 and an infrared camera module 5. In the top module 1, the input window 11 is shown, which is mounted in a housing 12. The optical characteristics of the input window are selected with respect to the optical wavelengths required by the user. The top module 1 furthermore contains a plane reflecting top mirror 13, see Figure 2, the task of which is to reflect the radiation entering through the input window 11 down into the intermediate module 2. The intermediate module 2 can contain a plurality of different optical functions, for example an inward reflection of infrared radiation towards an infrared camera 5 and/or a so-called 1:1 transmission or a so-called magnifying function. The optic module 3 presents an image to the gunner through an ocular 31 and has an interface with the laser range finder module 4. The laser range finder module 4 can be constructed of an arrangement specified for combat vehicle applications 41 or of an arrangement specified for air defence applications 42. A cable run (not shown) leads from the infrared camera module 5 to a display (not shown) which is mounted on the side of the sight and on which the thermal image from the infrared camera is shown to the gunner.

In the modules described above, the following details are particularly of significance to the invention, see Figure 2. The intermediate module 2 contains a beam divider 21 by means of which infrared radiation is reflected out to the infrared camera module 5, whilst the visible radiation and radiation from and to the laser range finder module 4 is transmitted. Applying a beam divider in this way for infrared radiation in the actual wavelength range of 8-12 »m in the sight for fire control is novel and is not used in existing types of sights. The optic module 3 contains a main lens 32 which radiates a convergent beam in the direction of a planar mirror 33 and the beam divider 34. Convergent visible light is reflected by the beam divider layer 34a in the direction of the prism 35 and passes this and the reticule 36 and the ocular 31. The convergent laser light passes through the beam divider layer 34a and the substrate 34b of the beam divider 34 and is thereby subjected to an imaging error in the substrate 34b, which is compensated in the corrector 37. The beam path arrangement around the beam divider 34 as described has a great design advantage. This is because it would have presented considerable problems to correct a visible beam path after it had passed the substrate 34b whereas, in contrast, the correction of the laser beam path through the substrate 34b according to the invention happens to be comparatively simple and cost-saving.

## Claims

1. Fire control sight for combat vehicles or antiaircraft defence, comprising optical channels for visible light, laser range finding and infrared imaging, the beams of the channels being superimposed on one another, the sight comprising an input window (11) which serves as a single common input aperture for all optical channels, two beam dividers (21, 34) for dividing the beams in optical channels for visible light, laser range finding and infrared imaging, the channel for visible light including an ocular (31) receiving the visible light, the channel for laser range finding including a laser range finder (41, 42) receiving the radiation for laser range finding, and the channel for infrared imaging including an infrared camera (5) receiving infrared radiation, characterized in that, seen from the common optical input aperture, a first of the two beam dividers (21) is arranged to separate the infrared radiation from the visible light and the radiation for the laser range finding and a second of the two beam dividers (34) is arranged to separate the visible light from the radiation for laser range finding, and in that a main lens (32) common to the visible light and the radiation for the laser range finding is arranged between the two beam dividers to generate a convergent beam in the direction of the second beam divider.

2. Fire control sight according to Claim 1, characterised in that the first beam divider (21) is constructed of a mirror which reflects infrared radiation and transmits visible light and radiation for laser range finding.

3. Fire control sight according to any of the preceding claims, characterised in that the second beam divider (34) is constructed of a substrate (34b) coated with a beam divider layer (34a), whereby visible light is reflected by the beam divider layer whilst radiation for laser range finding is transmitted through the beam divider layer and the substrate.

4. Fire control sight according to Claim 3, characterised in that a corrector (37) is arranged on the side of the substrate of the second beam divider for correcting for optical errors caused by the substrate.

## Patentansprüche

1. Feuerleitsichtgerät für Kampffahrzeuge oder Luftabwehrwaffen, mit optischen Kanälen für sichtbares Licht, Laserentfernungsmessung und Infrarotabbildung, wobei die Strahlungswege der Kanäle einander überlagert sind, wobei das Sichtgerät ein Eingangsfenster (11) als einzige gemeinsame Eintrittsöffnung für alle optischen Kanäle und zwei Strahlteiler (21,34) zum Aufteilen der Strahlen in optische Kanäle für sichtbares Licht, Laserentfernungsmessung und Infrarotabbildung aufweist, wobei der Kanal für sichtbares Licht ein das sichtbare Licht empfangendes Okular (31), der Kanal für Laserentfernungsmessung einen die Strahlung für die Laserentfernungsmessung empfangenden Laserentfernungsmesser (41,42) und der Kanal für Infrarotabbildung eine die Infrarotstrahlung empfangende Infrarotkamera (5) aufweist, dadurch **gekennzeichnet,** daß von der gemeinsamen optischen Eintrittsöffnung ausgesehen der erste der beiden Strahlteiler (21) so ausgebildet ist, daß er die Infrarotstrahlung von dem sichtbaren Licht und der Strahlung für die Laserentfernungsmessung abtrennt, und der zweite der beiden Strahlteiler (34) so ausgebildet ist, daß er das sichtbare Licht von der Strahlung für die Laserentfernung abtrennt, und daß eine für das sichtbare Licht und die Strahlung für die Laserentfernungsmessung gemeinsame Hauptlinse (32) zwischen den beiden Strahlteilern angeordnet ist, um einen in Richtung der zweiten Strahlteilers konvergenten Strahl zu erzeugen.

2. Feuerleitsichtgerät nach Anspruch 1, dadurch **gekennzeichnet,** daß der erste Strahlteiler (21) von einem Spiegel gebildet ist, der Infrarotstrahlung reflektiert und sichtbares Licht und Strahlung für Laserentfernungsmessung durchläßt.

3. Feuerleitsichtgerät nach einem der vorangehenden Ansprüche, dadurch **gekennzeichnet,** daß der zweite Strahlteiler (34) von einem Substrat (34b), das mit einer Strahlteilerschicht (34a) beschichtet ist, gebildet ist, wobei sichtbares Licht von der Strahlteilerschicht reflektiert wird, während Strahlung für Laserentfernungsmessung durch die Strahlteilerschicht und das Substrat durchgelassen wird.

4. Feuerleitsichtgerät nach Anspruch 3, dadurch **gekennzeichnet,** daß ein Korrekturglied (37) auf der Substratseite des zweiten Strahlteilers angeordnet ist, um von dem Substrat verursachte optische Fehler zu korrigieren.

## Revendications

1. Viseur de commande de tir pour véhicule de combat ou défense antiaérienne, comprenant des canaux optiques pour la lumière visible, la télémétrie laser et l'imagerie infrarouge, les faisceaux des canaux étant superposés les uns aux autres, le viseur comportant une fenêtre d'entrée (11) utilisée comme ouverture commune unique d'entrée pour tous les canaux optiques, deux séparateurs de faisceaux (21, 34) destinés à séparer les faisceaux dans des canaux optiques destinés à la lumière visible, à la télémétrie laser et à l'imagerie infrarouge, le canal destiné à la lumière visible comprenant un oculaire (31) qui reçoit la lumière visible, le canal de télémétrie laser comprenant un télémètre à laser (41, 42) qui reçoit le rayonnement de télémétrie laser, et le canal d'imagerie infrarouge comprenant une caméra infrarouge (5) qui reçoit le rayonnement infrarouge, caractérisé en ce que, depuis l'ouverture optique commune d'entrée, un premier des deux séparateurs de faisceaux (21) est destiné à séparer le rayonnement infrarouge de la lumière visible et du rayonnement de télémétrie laser, et un second des deux répartiteurs de faisceaux (34) est destiné à séparer la lumière visible du rayonnement de télémétrie laser, et en ce qu'un objectif principal (32) commun à la lumière visible et au rayonnement de télémétrie laser est placé entre les deux répartiteurs de faisceaux pour la formation d'un faisceau convergent dans la direction du second séparateur de faisceaux.

2. Viseur de commande de tir selon la revendication 1, caractérisé en ce que le premier séparateur de faisceaux (21) a la construction d'un miroir qui renvoie le rayonnement infrarouge et transmet la lumière visible et le rayonnement de télémétrie laser.

3. Viseur de commande de tir selon l'une quelconque des revendications précédentes, caractérisé en ce que le second séparateur de faisceaux (34) a une construction comprenant un substrat (34b) revêtu d'une couche de séparation de faisceaux (34a), de manière que la lumière visible soit réfléchie par la couche de séparateur de faisceaux alors que le rayonnement de télémétrie laser et transmis par la couche de séparation de faisceaux et le substrat.

4. Viseur de commande de tir selon la revendication 3, caractérisé en ce qu'un correcteur (37) est placé du côté du substrat du second séparateur de faisceaux afin qu'il corrige les erreurs optiques provoquées par le substrat.
